# EUROPEAN PATENT SPECIFICATION

(11) **EP 4 085 985 B1**
(45) Date of publication and mention of the grant of the patent: **03.04.2024**
(21) Application number: 21172783.9
(22) Date of filing: 07.05.2021
(51) Int. Cl.: B01D 29/21, B01D 35/147, B01D 35/153, B01D 35/16, B01D 35/30

(54) **FILTER CARTRIDGE, FILTER HOUSING AND FILTER SYSTEM**
FILTERPATRONE, FILTERGEHÄUSE UND FILTERSYSTEM
CARTOUCHE FILTRANTE, BOÎTIER DE FILTRE ET SYSTÈME DE FILTRATION

(43) Date of publication of application: 09.11.2022
(73) Proprietor: Hengst SE, 48147 Münster (DE)
(72) Inventor: ARDES, Wilhelm, 59387 Ascheberg (DE)
(74) Representative: Lohr, Jöstingmeier & Partner

(56) References cited:
- EP-A1- 1 870 152
- EP-A1- 1 967 247
- WO-A1-01/17654
- DE-A1- 10 309 428

## Description

### Field of the invention

The invention relates to a filter cartridge for being inserted into a filter housing. The invention further relates to the filter housing, being configured to receive the filter cartridge. Further, the invention relates to a kit comprising the filter housing and the filter cartridge.

### Description of the related art

Fluid filters are used in numerous applications, e.g., to filter oil being required as a lubricant and/or coolant of a (e.g., combustion) machine. Oil filters for these kinds of machines shall be as small as possible to keep manufacturing costs low, to use the space provided by the hull of automobiles, planes or ships as efficiently and to keep reduce their weight. At the same time the oil filters shall be easy to service, and the pressure drop for a given fluid flow through the filter shall be minimized.

EP 2373398 A1 relates to an air filter with a housing comprising a socket and a cover enclosing a volume in which a replaceable filter cartridge is positioned. The filter cartridge comprises an essentially cylindrical filter element with a fluid channel. On top of the filter element is a connector for connecting the filter element with the socket. The connector has a first port being in fluid communication with an air outlet of the socket. The air enters the filter cartridge via a first port and passes through a conduit of the connector to a slot in the peripheral surface of the filter cartridge. The air next passes the filter element, enters the fluid channel and from there flows via a second conduit of the connector to an air inlet of the socket. The connector and the upper end of the housing cover jointly engage into a recess of the socket, wherein a collar of the connector is located in between of the socket facing surface of the tubular housing cover and the bottom of the complementary recess. The housing cover facing surface of the collar is inclined and supports a gasket. When closing the cover, the gasket is compressed in a corner being delimited by the inclined surface of the collar, the radially inward facing surface of the socket's recess the socket facing end of the housing cover.

WO 2010/117799 A2 suggest a fluid filter cartridge and a fluid filter housing for the cartridge. The filter cartridge has a filter element defining a longitudinal axis. A front-end cap is attached to the socket facing end face of the filter element. The front-end cap has a fluid-outlet port being centered with the longitudinal axis and being delimited by a circular wall. The circular wall has a forward-facing side being inclined to the longitudinal axis. Further, the front-end cap has a protrusion configure to engage in a recess with inclined side surfaces, being configured to azimuthally orient the filter cartridge relative to the housing while advancing the filter cartridge to the socket.

EP 1 870 152 A1 suggests a filter having a top part with at least one inlet and at least one outlet channel and a bottom part with a filter element. The upper part has a housing and an insert. The inlet and outlet channel extend into the insert. The insert is interchangeably and rotatably mounted within the housing.

WO 01/17654 A1 relates to a filter canister. The filter canister has a main body with a top. An inlet port is positioned on the top of the main body and an outlet port is also positioned on the top of the main body with an offset from the inlet port. A filter cartridge is positioned within the main body. The filter cartridge has an outlet end sealingly engaging the outlet port and an inlet port identifier associated with the inlet port; and an outlet port identifier associated with the outlet port. The inlet port identifier comprises a first flange positioned on the inlet port and having a first diameter. The outlet port identifier comprises a second flange positioned on the outlet port having a second diameter.

DE 103 09 428 A1 suggests an air filter cartridge having a connector element with a front-facing side configured to mate with an air filter housing socket. In the front facing side is an inlet port and an outlet port, each being surrounded by a gasket. Further, the front facing side has a bore for receiving a positioning pin of the socket. Beyond, the front facing side is plane and configured to mate with the cartridge-facing socket surface. The filter element can be inserted in two azimuthal orientations. By rotating the connector element, the flow direction through the filter cartridge can be inverted.

### Summary of the invention

The problem to be solved by the invention is to simplify mounting of a fluid filter cartridge in a filter housing.

Solutions of the problem are described in the independent claims. The dependent claims relate to further improvements of the invention.

For example, a solution is provided by a fluid filter cartridge, as well referred to as "filter cartridge" or "cartridge". The fluid cartridge comprises at least a filter element with a front end, a rear end and a fluid channel. These filter elements are known in the art and can be made of plied filter paper, cloth, filter foam or the like and may optionally comprise end caps at their front and/or rear ends. The filter cartridge further defines a longitudinal axis. For example, the longitudinal axis may be identical to a symmetry axis of the filter element and/or to the symmetry axis of the contour of the front-end cap and/or of the contour of the rear-end cap. Generalizing, the longitudinal axis extends through the front end of the filter element and the through the rear end of the filter element.

Further, the filter cartridge comprises a connector element, being referred herein as *"connector".* The connector is attached to the front end of the filter element and may hence in operation provide a fluid connection between the filter cartridge and a housing socket ("socket" for short) of a filter housing. The connector thus comprises a front side facing away from the front end of the filter element in a forward direction and a rear side facing towards the front end of the filter element in a rearward direction. Herein we assume that the filter cartridge it is shifted during installation in the forward direction to thereby connect it to the socket, while the cartridge may be retracted when separating it from the socket.

The connector further comprises a bottom, fluid-inlet port and a fluid-outlet port. The fluid-inlet port comprises a fluid inlet wall surrounding an inlet through hole in the bottom. The fluid inlet wall extends from the bottom in the forward direction. Similarly, the filter cartridge comprises a fluid-outlet port with a fluid outlet wall. The fluid outlet wall surrounds an outlet through hole in the bottom and extends from the bottom in the forward direction.

The fluid inlet wall and/or the fluid outlet wall may support at least one gasket on their outward and/or inward facing side, wherein inward and outward in this context reference to center of the fluid-inlet port or fluid-outlet port, respectively. Alternatively, at least one gasket may be supported by a gasket support wall extending as well from the bottom e.g., on the inward or outward facing side of the gasket support wall. In all these examples is the at least one gasket preferably be located in between of the bottom and the first plain bearing surface.

For example, the fluid-inlet port may be in fluid communication with a first opening in the peripheral surface of the fluid filter cartridge and hence may enable a fluid flow through the connector to the peripheral surface of the filter element. The fluid-outlet port may be in fluid communication with fluid channel of the filter element and hence may enable to withdraw the filtered fluid from the filter cartridge.

In operation, the fluid-inlet port may be connected to a first fluid port of a housing socket and the fluid-outlet port may be connected to a second fluid port of the housing socket. Hence herein we assume that the first fluid port is a fluid-outlet port of the housing socket and the second fluid port is a fluid-inlet port of the housing socket, only to be able to clearly distinguish between ports of the cartridge and ports of the housing socket.

Preferably, a peripheral wall with a peripheral surface may be attached to the bottom. The peripheral wall may for example provide for a radial abutment, e.g., to center the connector in a housing cover, preferably already prior to closing the housing cover.

A first plain bearing surface of the connector faces in the forward direction, wherein the first plain bearing surface is configured to limit an axial movement of the filter cartridge in the forward direction. The first plain bearing surface thus provides for an axial abutment. The first plain bearing surface is provided by a set of first forward facing sides of walls or sections thereof, wherein the walls extend from the bottom in the forward direction. These walls may comprise the fluid-inlet wall and/or the fluid-outlet wall, but as well other walls extending from the bottom into the forward direction. This first plain bearing surface hence enables to rotate the filter cartridge relative to the socket, while already pushing the filter cartridge against a second plain bearing surface of the socket until the contours of the fluid-inlet port and the fluid-outlet port match with corresponding first and second ports of the socket. Servicing a filter cartridge is thus enhanced by the first plain bearing surface.

In a particularly preferred example is the contour of a first projection of the forward-facing sides of the fluid-inlet wall and of the fluid-outlet wall on a reference plane not point symmetric with respect to the longitudinal axis, wherein the reference plane is orthogonal to the longitudinal axis. This measure makes it impossible to accidentally invert the fluid flow through the filter cartridge by mismatching the fluid ports. For example, a fluid port mismatch would be to connect the fluid-inlet port of the cartridge to the second fluid port (i.e., to the fluid-inlet port) of a corresponding socket and/or connecting the fluid-outlet port of the cartridge to the first fluid port of the corresponding socket. Avoiding these mismatches by the suggested measures hence simplifies servicing the filter cartridge increases safety of operation.

If the contour of the first projection is not rotationally invariant relative to a rotation around the longitudinal axis (2) the same effect is obtained. Not rotationally invariant means that only rotation of the contour of the first projection by 2*π* = 360° maps the contour of the first projection on itself. Rotationally invariant thus means that a rotation of the corresponding object (in this case around the longitudinal axis) maps the object onto itself. In some cases, the object may be rotationally invariant only under certain angles; this is generally considered as a discontinuously rotationally invariant object. A continuously rotationally invariant object is mapped onto itself by any rotation around the corresponding axis or point.

The first plain bearing surface is preferably but not necessarily, a rotationally invariant surface. In another even preferred example, the first plain bearing surface is only a portion of a rotationally symmetric ring surface, wherein the portion itself is not rotationally invariant, at least not continuously rotationally invariant with reference to the longitudinal axis. In other words, a rotation of the first plain bearing surface by 2*π*=360° around the longitudinal axis generates at least one continuously rotationally invariant ring surface *S*₁. The continuously rotationally invariant ring surface is a set of points *R*(*r, ϕ*), wherein as usual r denotes the radius, i.e., the distance of the point R from the longitudinal axis and *ϕ* denotes the azimuth. The radius r may span from a maximum radius *rₘₐₓ* to a minimum radius *rₘᵢₙ,* hence *rₘₐₓ* ≥ *r* ≥ *rₘᵢₙ* and 0 ≤ *ϕ* ≤ 2*π* for all *R*(*r,ϕ*) E *S*₁. Each point *R*(*r,ϕ*) ∈ *S*₁ has a distance *d*_{|*R̅A̅*|}(*R*(*r*,*φ*)) = *d*(*r,ϕ*) to a plane *A,* wherein the plane A extends through the bottom and is orthogonal to the longitudinal axis. In other words, assuming cylinder coordinates, each point R is defined by the triple (*r*, *ϕ*, *d*_{|*R̅A̅*|})*.* Preferably, the distance *d(r, <p)* monotonically increases or decreases with increasing radius r, while being constant at any given radius *r* for all azimuth angles *ϕ.* The ring surface *S*₁ and hence as well the first plain bearing surface is this preferably concave or convex. The concave or convex shape centers the first plain bearing surface and hence the connector relative to a socket, while providing a rotational degree of freedom. The filter cartridge can thus be pushed against a another (i.e., convex or concave, respectively) (second) plain bearing surface and automatically centers on the another (second) plain bearing surface. An azimuthal alignment can be obtained by simply rotating the filter cartridge while pushing it against the another (second) surface. Once the azimuthal alignment has been reached, the fluid-inlet port and the first port as well as the fluid-outlet port and the second port may be connected to each other, e.g., by shifting the filter cartridge forward as will be explained below in more detail. Thus, preferably, the first plain bearing surface may have a recess configured to receive the second plain bearing surface and/or the second plain bearing surface may have a recess configured to receive the first plain bearing surface. In the example above, a second plain bearing surface may for example fit in between of the space or void being delimited by the walls extending from the bottom.

As defined in claim 1, it exists a point *P*₁ which has the same distance *d*_{|*R̅P̅*₁|} to all points on the first plain bearing surface. Thus, the first plain bearing surface is spherical, i.e. the rotational degree of freedom is enhanced. The filter cartridge can be rotated relative to the longitudinal axis and in addition pivoted relative to the point *P*₁. The location of the point *P*₁ is preferably on the longitudinal axis. The point *P*₁ can be in front of the first plain bearing surface or behind the first plain bearing surface, wherein "in front of" and "behind" reference to the forward direction. In case the point *P*₁ is in front of the bearing surface, i.e., spaced in the forward direction from the bearing surface the first plain bearing surface is a concave spherical surface. If the point *P*₁ is behind bearing surface, i.e., spaced in the rearward direction from the first plain bearing surface, the first plain bearing surface is a convex spherical surface. Both measures work equally well.

Preferably, the filter cartridge has at least a first protrusion which is delimited in a radial direction by an inner radius *r*_{48ᵢ} and by an outer radius *r*_{48ₒ}, wherein the radii are measured relative to the longitudinal axis. The first protrusion may extend in the forward direction over any feature of the connector withing a first ring being delimited by the inner radius *r*_{48ᵢ} and the outer radius *r*₄₈ of said first protrusion. This measure is another option which may provide for an azimuthal alignment of the filter cartridge relative to a filter socket. In an example, the filter cartridge's first plain bearing surface may be pushed against a corresponding second plain bearing surface while being rotated until the first protrusion abuts a protuberance protruding from the counterpart (e.g., a housing socket) in the rearward direction. Then the corresponding ports are aligned, the cartridge can be advanced in a forward direction, thereby connecting the mutually corresponding ports.

If the filter cartridge has at least a second protrusion being delimited in the radial direction by an inner radius *r*₄₉ᵢ and by an outer radius *r*_{49ₒ} relative to the longitudinal axis and if the second protrusion extends in the forward direction over any other feature of the connector within a second ring being delimited by the inner radius *r*_{49ᵢ} and the outer radius *r*_{49ₒ} of the second protrusion, the azimuthal alignment is even more reliable. This holds in particular if the first ring and the second ring do not overlap, i.e. if *r*_{48ᵢ} ≥ *r*_{49ₒ} or *r*_{48ₒ} ≤ *r*_{49ᵢ}. Particularly preferred are the first and the second protrusion azimuthally spaced by at least essentially 180°. This preferred measure further contributes to safely limit a rotation of the filter cartridge. As usual, at least essentially 180° means that 180° is preferred, but deviations *αₚ* can be accepted. Hence the angle *α* between the first and the second protrusion may be e.g., 180° ± *αₚ,* wherein *αₚ* ∈ Aₚ = {45°, 30°, 15°, 10°, 5°, 2.5°, 1°, 0°}. As usual ±*αₚ* means that the angle *α* can be in between of 180° - *αₚ* and 180° + *αₚ,* i.e. 180° - *αₚ* ≤ *α* ≤ 180° + *αₚ.*

For example, the ring surface *S*₁ may comprise at least two concentrical ring surface sections with a gap in between. The first protrusion and/or the second protrusion may extend through the gap, thereby the filter cartridge can be pivoted and rotated particularly reliably. Thus, in between of the walls and/or the wall sections which define the first plain bearing surface may be circular groove, into or through the first and/or second protrusion may extend. This groove enables a protuberance of the socket to rotate relative to the filter cartridge until it abuts the first or second protrusion.

In another embodiment the invention relates to a filter housing. In particular the invention relates to a filter housing for accommodating the filter cartridge being described above. As usual, the filter housing comprises a filter housing volume, being enclosed by a housing socket and a housing cover. Often, the filter housing socket and the filter housing cover each have a screw thread enabling to screw the housing cover to the socket, thereby enclosing a filter cartridge in the housing volume. But other means known in the art for releasably connecting the filter cover to the housing socket may be used as well. Generalizing, the housing cover is releasably attached to the housing socket. Further, the filter housing has a housing axis. The housing axis is a longitudinal axis, and may e.g., be defined as the screw axis of the optional screw threads. In any case, the housing axis extends through the housing cover and through the housing socket and can be considered as a middle axis of the housing volume.

The housing socket, as well briefly "socket" has a first fluid port configured to be connected to the fluid-inlet port. It may further comprise a second fluid port configured to be connected to the fluid-outlet port. Assuming no cartridge to be inserted, the fluid to be filtered would enter the housing volume through the first port and leave it through the second port. The terms first and second port thus are "aligned" with the intended fluid flow and have been selected only to verbally distinguish from the fluid-inlet port and the from the fluid-outlet port of the filter cartridge.

In operation, the first port is intended to be connected to the fluid-inlet port and the second port is connected to the fluid-outlet port. The corresponding alignment of the port is herein expressed by the verb "to match", i.e., if the ports match, the fluid-inlet port is aligned with the first port and the fluid-outlet port is aligned with the second port.

Further, the socket comprises a second plain bearing surface. It may be the only plain bearing surface of the socket. The term "second" plain bearing surface has been selected only to verbally distinguish it from the first plain bearing surface of the filter cartridge. The second plain bearing surface faces in the rearward direction, i.e., it faces from the socket towards the distal end to the housing cover (as well herein, briefly "cover").

The second plain bearing surface is configured to limit an axial movement of the filter cartridge in the forward direction. Preferably this limitation occurs only in case the respective ports do not match.

Further preferably, the contour of a second projection of the rear facing sides of the first fluid port and of the second fluid port on a reference plane being orthogonal to the housing axis is not point symmetric with respect to the housing axis. Thus, a port mismatch can be reliably avoided. If the ports of the filter cartridge are rotated by e.g., 180° around the longitudinal axis relative to their matching orientation, they simply cannot connect to the first port and to the second port. This can be obtained even if the ports have an identical shape or contour by offsetting at least one of the ports radially and/or azimuthally. In addition or alternatively, the contours of the first port and the second port may be different in shape and/or size.

As already apparent, the first fluid port may be defined by a first open end of a first conduit in the second plain bearing surface. Similarly, the second fluid port may be defined by a second open end of a second conduit in the second plain bearing surface. Thus, the front surfaces of the walls forming the first plain bearing surface may slide over the second plain bearing surface until the ports match. Once this matching is obtained, the first plain bearing surface may be inserted into a recess in the second plain bearing surface thereby connecting the first fluid port to the fluid-inlet port and the second fluid port to the fluid-outlet port.

Particularly preferred is the contour of the second projection rotationally invariant relative to a rotation around the housing axis. This measure as well contributes to avoid connecting mismatching ports.

For example, a rotation of the second plain bearing surface by 2*π* around the housing axis may generate at least one continuously rotationally invariant ring surface *S*₂, being a set of points *R*₂(*r*,*ϕ*), and in that each point *R*₂(*r*,*ϕ*) has a distance *d*_{|*R̅*₂*S̅*₂|}(*R*₂(*r*,*φ*)) = *d*₂(*r,ϕ*) to a plane *A*₂, wherein the plane *A*₂ extends through housing and is orthogonal to the housing axis. The distance *d*₂(*r,ϕ*) may preferably monotonically increases or decreases with increasing radius r, while being constant at any given radius r for all azimuth angles *ϕ*. Thus, the surface *S*₂ being generated by a rotation of the second plain bearing surface is preferably convex or concave, this holds in particular if the first plain bearing surface of the corresponding filter cartridge is concave or convex, respectively. Each of these measures contributes to align the longitudinal axis to the housing axis, thereby simplifying installation of a filter cartridge.

As defined in claim 8, it exists a point *P*₂ which has the same distance *d*|_{*R̅*₂*P̅*₂|} to all points *R*₂ on the second plain bearing surface. Thus, the second plain bearing surface may be a section of a sphere, it may be convex of concave, depending on the location of the point *P*₂. In a preferred example the point *P*₂ is on the housing axis. And in case the first and the second plain bearing surfaces contact each other, the point *P*₂ is preferably at least essentially at the same location than the point *P*₁ of the first plain bearing surface. At least essentially at the same location as usual means that the same location is preferred but deviations may be accepted. For example, if the first surface is convex and the point *P*₂ is located in front of the point *P*₁ then the contact surface between the two bearing surfaces is reduced to a line or sections thereof. The same happens if *P*₂ is located behind the point *P*₁ and/or if first surface is concave. This is acceptable but less preferred.

Further, the filter housing may further optionally comprise a first protuberance being delimited in a radial direction by an inner radius *r*_{148ᵢ} and by an outer radius *r*_{148ₒ} relative to the housing axis, wherein first protuberance preferably extends in a rearward direction e.g., over the second plain bearing surface. Optionally, the filter housing may comprise a second protuberance being delimited in a radial direction by an inner radius *r*_{149ᵢ} and by an outer radius *r*_{149ₒ} relative to the housing axis. Similarly, the second protuberance may preferably extend in a rearward direction, for example over the second plain bearing surface. The protuberances may provide an azimuthal abutment limiting a rotation of a filter cartridge on the second plain bearing surfaces. The inner and outer radii of the first and second protuberances preferably do not overlap, i.e., preferably *r*_{148ᵢ} ≥ *r*_{149ₒ} or *r*_{148ₒ} ≤ *r*_{149ᵢ}. Similar to the optional first and second protrusions of the connector, the first and second protuberances are preferably azimuthally spaced, e.g., by at least essentially 180°, i.e. by 180° ± *αₚ.*

A preferred filter system may comprise at least one of the filter housing and/or the filter cartridge as described above. The filter cartridge may thus be configured to be inserted into the filter housing and the filter housing may be configured to receive and/or accommodate the filter cartridge.

### Description of Drawings

In the following the invention will be described by way of example, without limitation of the general inventive concept, on examples of embodiment with reference to the drawings.
- Figure 1: shows a filter cartridge in a filter housing.
- Figure 2: shows a cross sectional view of a connector of the filter cartridge in Fig. 1 to 3.
- Figure 3: shows the forward-facing side of the connector.
- Figure 4: shows a perspective view of the connector.
- Figure 5: shows a side view of the housing socket of Fig. 1.
- Figure 6: shows a rear view of the housing socket of Fig. 1.
- Figure 7: shows a perspective view of the rear side of the housing socket of Fig. 1.
- Figure 8: shows a sectional view of the connector being oriented in a first azimuthal position on a plain bearing surface of the housing socket.
- Figure 9: shows a sectional view of the connector being oriented in a second azimuthal position on the plain bearing surface of the housing socket.
- Figure 10: shows a sectional view of the connector being oriented in a third azimuthal position on the plain bearing surface of the housing socket.
- Figure 11: shows a first sectional view of the connector being oriented in a fourth azimuthal position on the plain bearing surface of the housing socket.
- Figure 12: shows a first sectional view of the connector being oriented in a fifth azimuthal position on the plain bearing surface of the housing socket.
- Figure 13: shows a detail of the filter cartridge prior to closing the filter housing.
- Figure 14: shows the detail of the filter cartridge prior to closing the filter housing after aligning the filter cartridge with the filter housing.

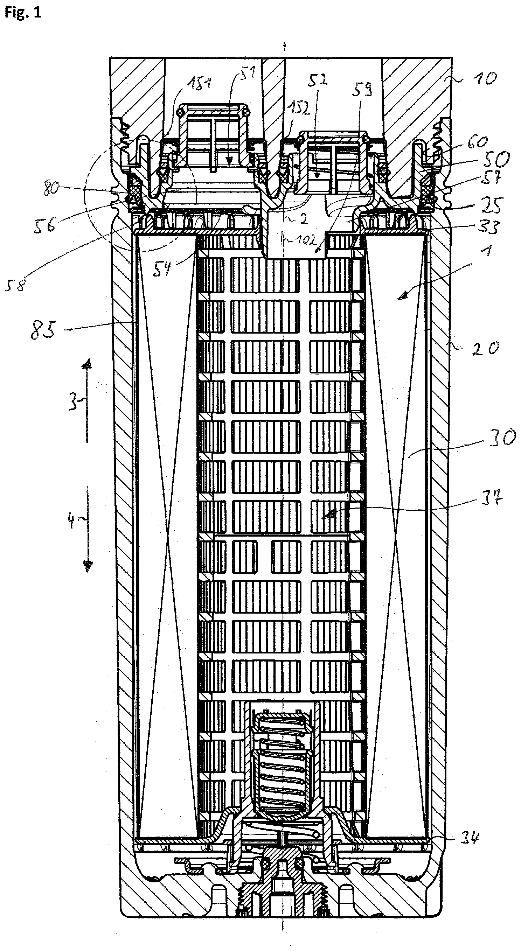

In Fig. 1 a first embodiment of a filter cartridge 1 is shown. The filter cartridge 1 is located inside a filter housing with a socket 10 and a housing cover 20. As can be seen, the housing cover 20 is connected by an optionally threaded connection to the housing socket 10. The filter housing may optionally have a sealing surface 25 facing inwards, preferably radially inwards towards a longitudinal axis 2 of the filter cartridge 1. In this figure, the longitudinal axis 2 of the filter cartridge 1 is aligned with a housing axis 102.

The filter cartridge 1 has a connector element 50, as well briefly "connector 50", for fluidly connecting a filter element 30 of the filter cartridge 1 into a fluid flow. The filter element 30 defines a fluid channel 37 sharing the longitudinal axis 2. The socket may have a first fluid port 151 and a second fluid port 152. As depicted, the first fluid port 151 may be fluidly connected to a fluid-inlet port 51 of the connector 50 and hence of the filter cartridge 1. Similarly, the second fluid port 152 may be fluidly connected to a fluid-outlet port 52 of the connector 50 and hence of the cartridge 50. In operation, a fluid, (e.g., an oil, water, a gas or a fuel), may flow from through the first fluid port 151 and the fluid-inlet port 51 into the connector 50 and from the fluid-inlet port 51 through an optional first conduit 56 to a first fluid opening 58 which may be in the in the peripheral surface of the filter cartridge 1. In the depicted example, the first fluid opening 58 is a slot being formed in between of a rearward-facing side 54 of the connector 50 and a front-end cap 33 of the filter element 30. But this location is only a preferred example. In other examples the boundary of the first fluid opening 58 may be entirely defined by the connector 50 or alternatively by the front-end cap 33 or even by some other part of the cartridge 1. In any case, the fluid may leave the filter cartridge 1 via the first fluid opening 58 and may enter a gap 85 being provided between the housing cover 20 and the filter element 30. From there, the fluid may pass the filter element 30 and may enter into the fluid channel 37. The fluid may be removed from the fluid channel 37 via a second fluid port 52, which may e.g., be formed by the optional front-end cap 33. Alternatively, as shown in the depicted example, filtered fluid may be removed through a second fluid opening 59 in the connector 50. The optional second fluid opening 59 may be in fluid communication with an optional fluid-outlet port 52 via an optional second conduit 57. The optional fluid-outlet port 52 may preferably be coupled to a second fluid port 152 of the socket 10.

An optional gasket 80 may be located between a peripheral surface 60 of the connector 50 and the optional sealing surface 25 of the housing, to thereby separate the gap 85 in a forward portion and a rearward portion. This separation disables a fluid flow from the rearward portion into the forward portion of the gap 85 which fluid flow would lead to leakage of the (e.g., oil or gas or fuel, etc.) filter housing. The optional gasket 80 thus seals the forward portion from the rearward portion of the gap 85.

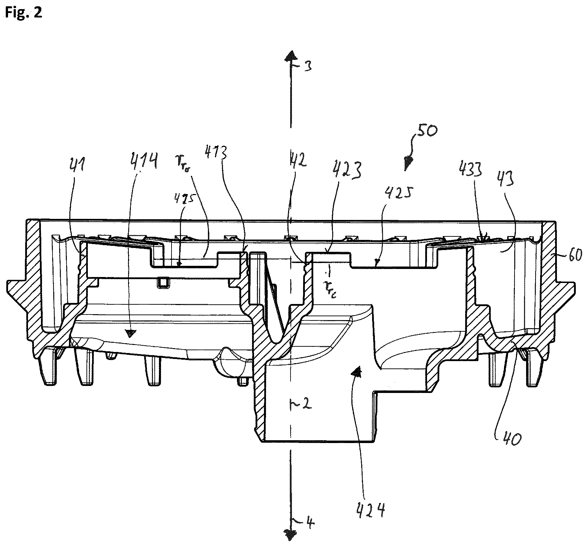

As can be see in Fig. 2, 3 and 4, the connector 50 has a bottom 40. An optional peripheral wall 60 may extend from the bottom 40 at least essentially parallel to the longitudinal axis 2 for example it may extend at least essentially in the forward direction 3. The peripheral wall 60 has a peripheral surface which may support e.g., the optional gasket 80 as shown in Fig. 1. A number of walls 41, 42, 43 may extend from the bottom 40 in the forward direction 3. The walls 41, 42, 43 each have a forward-facing side 413, 423, 433. These forward-facing sides 413, 423, 433 form a first plain bearing surface. This first plain bearing surface 413, 423, 433 is preferably discontinuous, namely intersected by the spaces between the walls 41, 42, 43, but as can be seen in Fig. 2, the first plain bearing surface is spherical, i.e., there exists a point *P*₁ which has the same distance to all points on the first plain bearing surface413, 423, 433. Preferably, like in the depicted example the point *P*₁ is on the longitudinal axis. In the Figures, the point *P*₁ is not shown. Summarizing, the first plain bearing surface 413, 423, 433 is preferably a section of a sphere being formed by forward facing sides 413, 423, 433 of walls 41, 42, 43 extending in the forward direction 3 from the bottom.

The first wall 41 surrounds an inlet through hole 414 in the bottom 40 and hence provides the fluid-inlet port 51, thus when referencing to the fluid-inlet port 51 one may as well use the reference numeral 41 indicating its boundary. In other words, the fluid-inlet port 51 may comprises the first wall 41, which thus is a fluid inlet wall 41 surrounding the inlet through hole 414 in the bottom 40. Similarly, the second wall 42 surrounds an outlet-through hole 424 in the bottom 40 and hence may provide the fluid-outlet port 52. Thus, the reference numeral 42 indicating the boundary of the fluid-outlet port 52 may be used as well to indicate the fluid-outlet port 52. To rephrase it slightly differently, the fluid-outlet port 52 may comprise the second wall 42, which thus may be considered as fluid-outlet wall 42 surrounding the outlet-through hole 424 in the bottom 40.

As a consequence of the spherical shape of the first plain bearing surface 413, 423, 433, the connector 50 may be rotated around the longitudinal axis 2 and may pivot relative to the point *P*₁. As can be seen in Figs. 2, 3 and 4 the fluid-inlet port 51 and the fluid-outlet port 52 are not symmetric to the longitudinal axis 2, the effect of which is explained in more detail below.

In between of the walls 41, 42 and 43 is a groove or void, being delimited in the rearward direction 4 by the bottom 40 and being open in the forward direction 3. As will be apparent below, the contour of this groove or void is preferably not rotationally invariant under a rotation around the longitudinal axis 2.

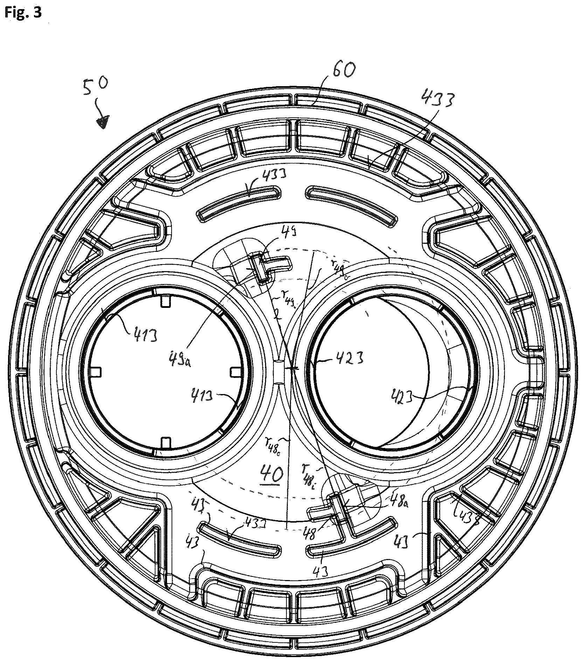

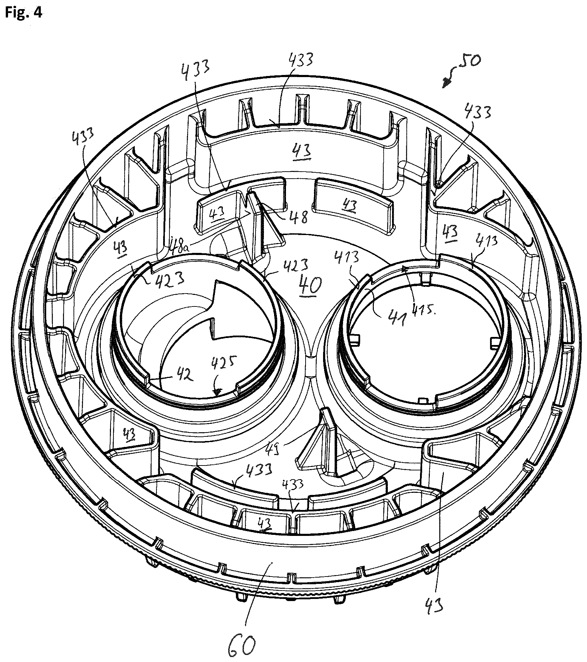

A first protrusion 48 and a second protrusion 49 may extend between the walls 41, 42, 43 from the bottom in the forward direction 3. The first protrusion 48 may extend in the radial direction from a first inner radius *r*_{48ᵢ} to a first outer radius *r*_{48ₒ} and the second protrusion may extend radially between a second inner radius *r*_{49ᵢ} and a second outer radius *r*_{49ₒ}. As can be seen in Fig. 3, the radii of the first and the second protrusions 48, 49 preferably do not overlap. Further, as can be seen best in Fig. 4, the first and second protrusions 49, 49 may have an azimuthal abutment surface 48a and 49a, respectively. Preferably, the azimuthal abutments 48a and 49a have an azimuthal spacing of at least essentially 180°, of 180° ± *αₚ.*

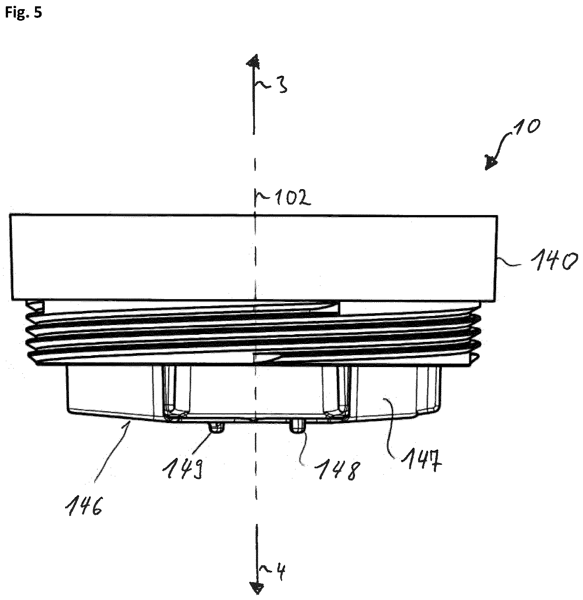

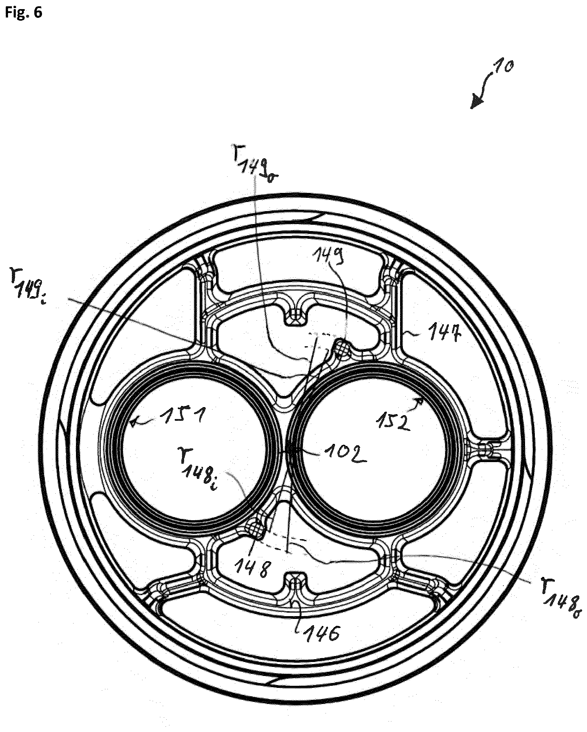

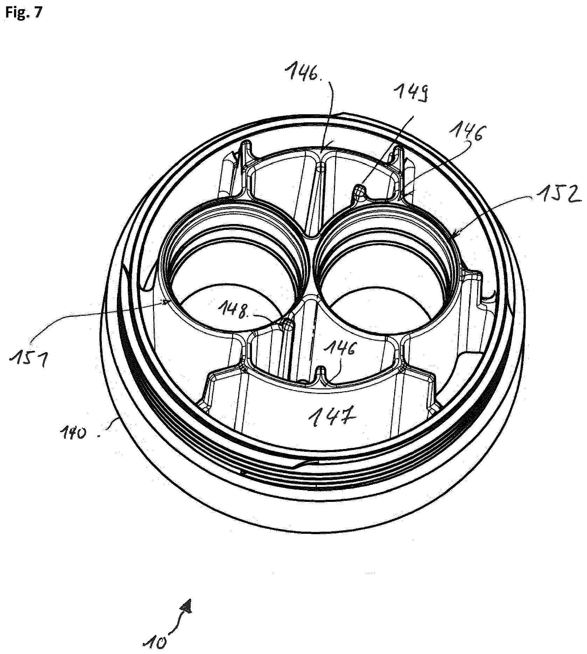

The walls 41, 42 may have recesses 415, 425 in their respective forward-facing sides 413, 423. The recesses may provide a corridor between an inner recess radius *r_{rᵢ}* and an outer recess radius *r_{rₒ}.* Preferably, the outer recess radius *r_{rₒ}* is greater (or equal) the maximum of the first and second outer radii, i.e., preferably *rᵣₒ* ≥ *Max*([*r*_{48ᵣ}*, r*_{49ₒ}}). Further preferably, is the inner recess radius *r_{rᵢ}* smaller (or equal) than the minimum of the first and second inner radii *r*_{48ᵢ} and *r*_{49ᵢ}, hence preferably *r_{rᵢ}* ≤ *Min*({*r*_{48ᵢ}, *r*_{49ᵢ}}). Thus, an optional protuberance 148, 149 (see Fig. 5 to Fig. 7) of the socket 10 may rotate relative to the first bearing surface 413, 423, 433 around the longitudinal axis 2, until it abuts the first protrusion 48 or the second protrusion 49. To rephrase this in the corresponding other reference system, the first bearing surface 413, 423, 433 may rotate on the second bearing surface 146 of the socket 10 until the protrusions 48, 49 abut the corresponding protuberances 148, 149 and thereby align the inlet-fluid port 51 with the first fluid port 151 and the outlet-fluid port 52 with the second fluid port 152.

A socket 10 configured to receive the filter cartridge is shown in Fig. 5 to Fig. 7. The socket 10 may have a base 140 with an optional screw thread for engagement with an optional screw thread to the housing cover 20 (see Fig. 1). As shown in Fig. 5 to Fig. 7, the socket has a second plain bearing surface 146. The second plain bearing surface 146 may be provided by the rearward facing side of a wall like structure 147 of the housing socket 10 being supported by the base 140. The denominator "second" is used only to verbally distinguish it from the "first" plain bearing surface 413, 423, 433 which is provided by the filter cartridge 1 (see above).

As can be seen in Fig.5, the second plain bearing surface 146 may as well be spherical, i.e., all points of the second plain bearing surface 146 have a single distance to point *P*₂. The point *P*₂ is preferably on the housing axis 102 and is not depicted in the figures. Optional first and second protuberances 148, 149 may extend in the rearward direction 4 over the second plain bearing surface 146. These first and second protuberances 148, 149 are preferably configured as azimuthal abutments for the first and second protrusions 48, 49, respectively. Hence, the first protuberance 148 may, e.g. have a radial extension between *r*_{148ᵢ} to *r*_{148ₒ} that overlaps with the radial extension of the first protrusion 48 being defined by *r*_{48ᵢ} and *r*_{48ₒ}. Thus, particularly preferred [*r*_{148ᵢ}*,r*_{148ₒ}] ⊆ [*r*_{48ᵢ},*r*_{48ₒ}] and/or [*r*_{48ᵢ},*r*_{48ₒ}] ç [*r*_{148ᵢ},*r*_{148ₒ}], Similarly the second protuberance 149 may, e.g. have a radial extension between *r*_{149ᵢ} to r_{149ₒ} that overlaps with the radial extension of the second protrusion 49 being defined by *r*_{49ᵢ} and *r*_{49ₒ}. Again, particularly preferred [*r*_{149ᵢ},*r*_{149ₒ}] ⊆ [*r*_{49ᵢ}, *r*_{49ₒ}] and/or [*r*_{49ᵢ}, *r*_{49ₒ}] ⊆ [*r*_{149ᵢ,} *r*_{149ₒ}].

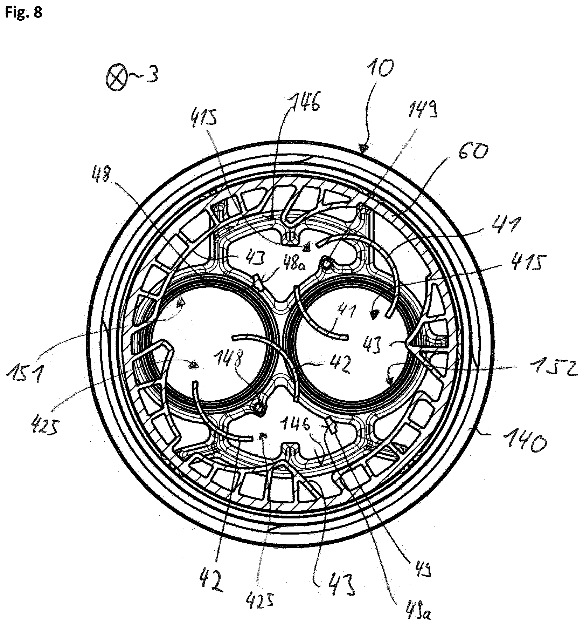

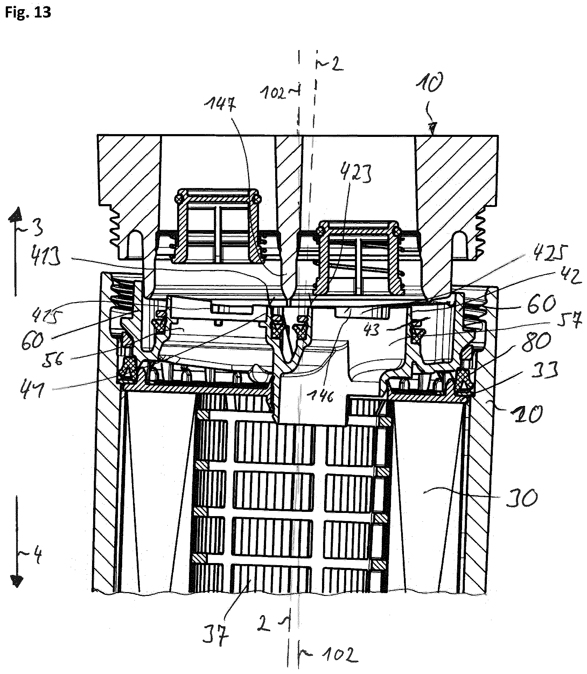

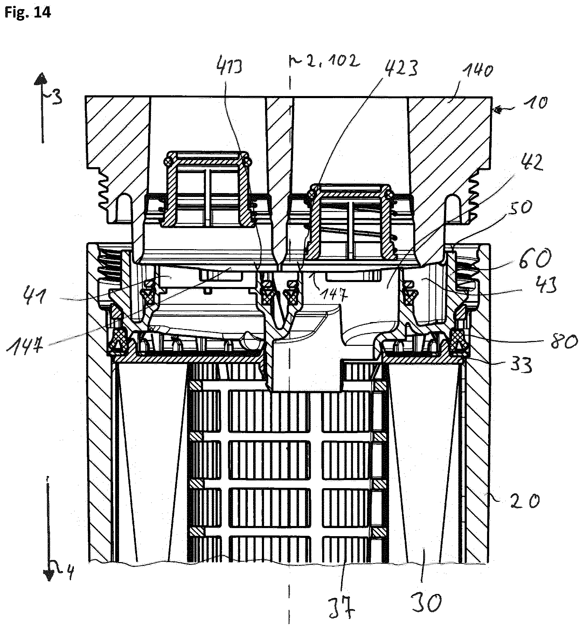

When mounting a filter cartridge 1 to the housing, the filter cartridge 1 needs to be correctly oriented in azimuthal direction relative to housing socket 10 and in addition, the longitudinal axis 2 of the filter cartridge 1 needs to be aligned with the housing axis 102. Both can easily be accomplished due to the first plain bearing surface 413, 423, 433. The azimuthal alignment of the ports 51, 52, 151, 152 will be explained with reference to Fig. 8 to 12 and with the reference to Fig. 13 and 14 we will explain the alignment of the longitudinal axis 2 with the housing axis 102.

When mounting the filter cartridge 1, it may be inserted into a housing cover 20. Next the person servicing the filter may want to attach the housing cover 20 to the housing socket 10. The person may thus advance the first plain bearing surface 413, 423, 433 against the second plain bearing surface 146, when trying to close the housing cover 20. As shown in Fig. 8, the ports 51, 52, 151, 152 are not necessarily aligned to each other and often are not even visible to the person trying to close the housing cover 20. As the first plain bearing surface 413, 423, 433 is a section of a rotationally invariant surface it may slide on the second plain bearing surface 146. In Fig. 8 the first plain bearing surface 413, 423, 433 is hidden by the corresponding walls 41, 42, 43, but their projections onto the drawing plane is identical with the contour of the first plain bearing surface 413, 423, 433.

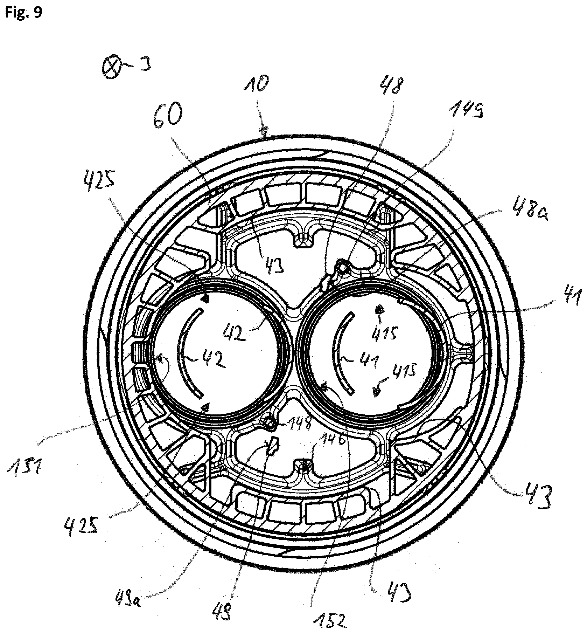

In the next step, the person will rotate the housing cover 20 clockwise (assuming a right-hand thread, and counterclockwise in case of a left-hand thread) trying to engage the threads which have not yet become in contact, because the first plain bearing surface 413, 423, 433 blocks the filter cartridge 1 from being moved further in the forward direction 3. This rotation entrains the filter cartridge 1 and hence the connector 50 as shown in Fig. 9 to 11. Comparing Fig. 8 and Fig. 9, it becomes clear that the protuberances 148, 149 may pass through the recesses 415, 425 in the walls 41 and 42. In Fig. 8 to Fig. 12, the recesses 415, 425 are visible as openings in the walls 41 and 42 and each indicated by an arrow pointing into the openings.

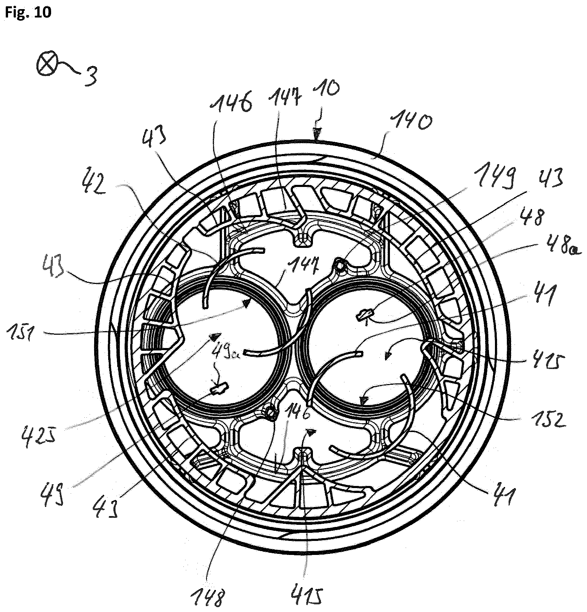

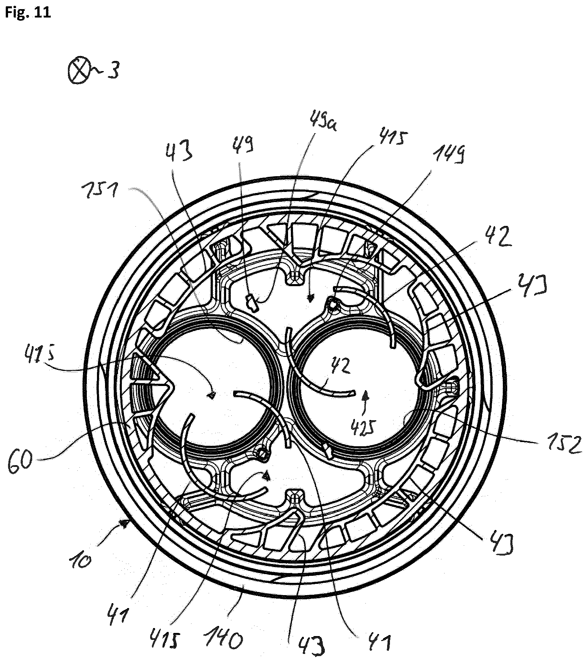

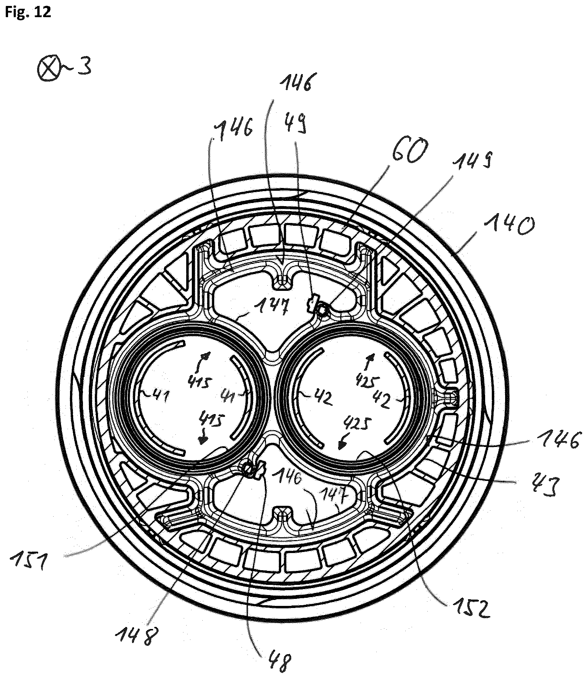

As can be seen in Fig. 9, the fluid-inlet port 41 may be positioned above the second port 152 and the fluid-outlet port 42 may be positioned above the first port 151, but as the first and second walls 41, 42 are not point symmetric to the longitudinal axis 2, these ports 41(=51), 42(=52), 151, 152 do not fit into each other. The filter cartridge 1 remains supported in the forward direction 3 by the first plain bearing surface 413, 423, 433. The rotation may continue as shown in Fig. 10 and Fig. 11 and the protuberances 148, 149 may each pass through the corresponding other recess 415, 425 in the walls 41, 42 delimiting the fluid-inlet port 51 and the fluid outlet port 52, respectively. The rotation may hence continue until the optional protrusions 48 and 49 abut the optional protuberances 148, 149 which is shown in Fig 12. At this point it is noted that a single of the optional protrusions 48, 49 would be sufficient to limit the rotation, but two or more are preferred. The fluid-inlet port 41(=51) now matches with the first port 151 and the fluid-outlet port 42(=52) matches with the second port 152. As can be seen in Fig. 12, in this orientation, the contour of the second plain bearing surface 146 does no longer overlap with the contour of the walls 41, 42 and 43 and as well not with the contour of the protrusions 48, 49. Accordingly the filter cartridge 1 and hence the filter housing 20 can be advanced in the forward direction 3 thereby connecting the corresponding ports 51, 52,151, 152. Further, after advancing the housing cover 20 the screw threads (and/or any other fastening means) can engage and the housing cover 20 may be firmly closed.

The alignment of the longitudinal axis 2 with the housing axis 102 is shown in Fig. 13 and Fig. 14. Initially, when the first bearing surface 413, 423, 433 abuts the second bearing surface 146, the two axes 2, 102 are not aligned. Due to the spherical shape of the first plain bearing surface 413, 423, 433 the filter cartridge 1 can be pivoted easily until the axes 2, 102 are aligned as shown in Fig. 14. Once the alignment is obtained, the contours of the first and the second plain bearing surfaces 413, 423, 433, 146 no longer overlap and the filter cartridge 1 can be advanced, thereby connecting the ports 51,52, 151, 152 as explained above.

### List of reference numerals

- 1: filter cartridge
- 2: longitudinal axis
- 3: forward direction
- 4: rearward direction

- 10: socket
- 102: housing axis
- 140: base
- 146: second plain bearing surface
- 147: wall like structure / structure
- 148: first protuberance
- 149: second protuberance
- 151: first fluid port
- 152: second fluid port

- 20: housing cover
- 25: sealing surface

- 30: filter element
- 33: front-end cap
- 34: rear-end cap
- 37: fluid channel

- 40: bottom
- 41: wall / fluid-inlet wall / fluid-inlet port
- 413: forward facing side
- 414: inlet through hole
- 415: recess in forward facing side
- 42: wall / fluid-outlet wall / fluid-outlet port
- 424: outlet through hole
- 423: forward facing side
- 425: recess in forward facing side

- 43: wall
- 433: forward facing side

- 48: first protrusion
- 48a: abutment surface of first protrusion
- 49: second protrusion
- 49a: abutment surface of second protrusion

- 50: connector element / connector
- 51: fluid- inlet port
- 52: fluid-outlet port
- 53: forward-facing side
- 54: rearward-facing side
- 56: first conduit
- 57: second conduit
- 58: first fluid opening
- 59: second fluid opening
- 60: peripheral wall
- 80: gasket
- 85: gap
- *r_{rᵢ}*: inner radius of recess
- *r_{rₒ}*: outer radius of recess
- *r*_{48ᵢ}: inner radius of first protrusion
- *r*_{48ₒ}: outer radius of first protrusion
- *r*_{49ᵢ}: inner radius of second protrusion
- *r*_{49ₒ}: outer radius of second protrusion
- *r*_{148ᵢ}: inner radius of first protuberance
- *r*_{148ₒ}: outer radius of first protuberance
- *r*_{149ᵢ}: inner radius of second protuberance
- *r*_{149ₒ}: outer radius of second protuberance

## Claims

1. A filter cartridge (1) comprising at least:
- a filter element (30) with a front end, a rear end and a fluid channel (37);
- a longitudinal axis (2) extending through the front end of the filter element (30) and through the rear end of the filter element (30),
- a connector element (50) being attached to the front end of the filter element (30), wherein the connector element (50) has at least:
o a forward-facing side (53) facing away from the front end of the filter element (30) in a forward direction (3) and a rearward-facing side (54) facing towards the front end of the filter element (30) in a rearward direction (4),
o a bottom (40),
o a fluid-inlet port (51) comprising a fluid inlet wall (41), which fluid inlet wall (41) surrounds an inlet through hole (414) in the bottom (40) and extends from the bottom (40) in the forward direction (3),
o a fluid-outlet port (52) comprising a fluid outlet wall (42), which fluid outlet wall (42) surrounds an outlet through hole (424) in the bottom (40) and extends from the bottom (40) in the forward direction (3),
o a peripheral wall (60) being attached to the bottom (40),
o a first plain bearing surface facing in the forward direction, wherein the plain bearing surface is configured to limit an axial movement of the filter cartridge (1) in the forward direction (3),
wherein
the first plain bearing surface is provided by a set of first forward facing sides (413, 423, 433) of walls (41, 42, 43) or sections thereof, wherein the walls (41, 42, 43) extend from the bottom (40) in the forward direction (3),
**characterized in that**
there exists a point *P*₁ which has the same distance d_{|*R̅P̅*|} to all points on the first plain bearing surface.

2. The filter cartridge (1) of claim 1 **characterized in that**
the contour of a first projection of the forward facing sides (413, 423) of the fluid inlet wall (41) and the fluid outlet wall (42) on a reference plane being orthogonal to the longitudinal axis (2) is not point symmetric with respect to the longitudinal axis (2) and **in that** the contour of the first projection is not rotationally invariant relative to a rotation around the longitudinal axis (2).

3. The filter cartridge (1) of claim 1 or 2 **characterized in that**
a rotation of the plain bearing surface by 2*π* = 360° around the longitudinal axis (2) generates at least one ring surface *S*₁, being a set of points *R*(*r, ϕ*), and **in that** each point *R*(*r, ϕ*) has a distance *d*_{|*R̅S̅*|} (*R*(*r*,*φ*)) = *d*(*r,ϕ*) to a plane *A,* wherein the plane *A* extends through the bottom (40) and is orthogonal to the longitudinal axis (2), and **in that** the distance *d(r, <p)* monotonically increases or decreases with increasing radius *r*, while being constant at any given radius *r* for all azimuth angles *ϕ.*

4. The filter cartridge (1) of one of the previous claims, **characterized in that** the point *P*₁ is on the longitudinal axis (2).

5. The filter cartridge (1) of one of the previous claims, **characterized in that**
- the filter cartridge (1) has at least a first protrusion (48) being delimited in a radial direction by an inner radius *r*_{48ᵢ} and by an outer radius *r*_{48ₒ} relative to the longitudinal axis (2),
- the first protrusion (48) extends in the forward direction (3) over any feature of the connector (50) within a first ring being delimited by the inner radius *r*_{48ᵢ} and the outer radius *r*_{48ₒ} of said first protrusion (48).

6. The filter cartridge (1) of claim 5, **characterized in that**
- the filter cartridge (1) has at least a second protrusion (49) being delimited in the radial direction by an inner radius *r*_{49ᵢ} and by an outer radius *r*_{49ₒ} relative to the longitudinal axis (2) and **in that**
- the second protrusion (49) extends in the forward direction (3) over the any other feature of the connector (50) within a second ring being delimited by the inner radius *r*_{49ᵢ} and the outer radius *r*_{49ₒ} of the second protrusion (49), and **in that**
- the first ring and the second ring do not overlap, i.e. *r*_{48ᵢ} ≥ *r*_{49ₒ} or *r*_{48ₒ} ≤ *r*_{49ᵢ}.

7. The filter cartridge (1) of claim 4 or claim 5, **characterized in that** the ring surface *S*₁ of claim 3 has at least two concentrical ring surface sections with a gap in between, and **in that** the first protrusion (48) and/or the second protrusion (49) extend through the gap.

8. A filter housing for accommodating a filter cartridge (1) of one of the previous claims, wherein the filter housing comprises a filter housing volume, being enclosed by a housing socket (10) and a housing cover (20), wherein
- the housing cover (20) is releasably attached to the housing socket (10),
- the filter housing has a housing axis (102),
- the socket (10) has a first fluid port (151) configured to be connected to the fluid-inlet port (51) and a second fluid port (152) configured to be connected to the fluid-outlet port (52);
- the socket (10) comprises a second plain bearing surface (146) facing in the rearward direction (4), wherein the second plain bearing surface (146) is configured to limit an axial movement of the filter cartridge (1) in the forward direction (3),
**characterized in that** it exists a point *P*₂ which has the same distance *d*_{|*R̅*₂*P̅*₂|} to all points *R*₂ on the second plain bearing surface.

9. The filter housing of claim 8, **characterized in that** the first fluid port (151) is defined by a first open end of a first conduit in the second plain bearing surface (146) and/or **in that** the second fluid port (152) is defined by a second open end of a second conduit in the second plain bearing surface (146).

10. The filter housing of claim 8 or 9, **characterized in that**
the contour of the second projection is not rotationally invariant relative to a rotation around the housing axis (102).

11. The filter housing of one of claims 8 or 10, **characterized in that**
a rotation of the second plain bearing surface by 2*π* around the housing axis (102) generates at least one ring surface *S*₂, being a set of points *R*₂(*r*,*ϕ*), and **in that** each point *R*₂(*r*,*ϕ*) has a distance *d*_{|*R̅*₂*S̅*₂|}(*R*₂(*r*,*φ*)) = *d*₂(*r,ϕ*) to a plane *A*₂, wherein the plane *A*₂ extends through the housing and is orthogonal to the housing axis (102), and **in that** the distance *d*₂(*r, ϕ*) monotonically increases or decreases with increasing radius *r*, while being constant at any given radius *r* for all azimuth angles *ϕ*.

12. The filter housing of one of claims 8 to 11, **characterized in that** the housing socket (10) further comprises:
- a first protuberance (148) being delimited in a radial direction by an inner radius *r*_{148ᵢ} and by an outer radius *r*_{148ₒ} relative to the housing axis (102), wherein the first protuberance (148) extends in a rearward direction (4) over the second plain bearing surface, and/or
- a second protuberance (149) being delimited in a radial direction by an inner radius *r*_{149ᵢ} and by an outer radius *r*_{149ₒ} relative to the housing axis (102), wherein the second protuberance (149) extends in a rearward direction (4) over the second plain bearing surface.

13. The filter housing of one of claims 8 to 12, **characterized in that** the housing socket (10) has a first screw thread and **in that** the housing cover (20) has a second screw thread being complementary to the first screw thread, and that the thread axis is the housing axis (102).

14. The filter housing of one of claims 8 to 13, **characterized in that** the contour of a second projection of the rear facing sides (146) of the first fluid port (151) and of the second fluid port (152) on a reference plane being orthogonal to the housing axis (2) is not point symmetric with respect to the housing axis (2).

15. A filter system **characterized in that** it comprises at least one of the filter housing of one of claims 8 to 14 and/or a filter cartridge (1) of one of claims 1 to 7.

## Patentansprüche

1. Eine Filterkartusche (1) mindestens aufweisend:
- ein Filterelement (30) mit einem vorderen Ende, einem hinteren Ende und einem Fluidkanal (37);
- eine Längsachse (2), welche sich durch das vordere Ende des Filterelements (30) und durch das hintere Ende des Filterelements (30) erstreckt,
- ein Verbinderelement (50), welches an dem vorderen Ende des Filterelements (30) befestigt ist, wobei das Verbinderelement (50) zumindest Folgendes aufweist
o eine nach vorne gerichtete Seite (53), welche vom vorderen Ende des Filterelements (30) abgewandt in eine Vorwärtsrichtung (3) weist und eine nach hinten gerichtete Seite (54), welche hin zum vorderen Ende des Filterelements (30) in eine Rückwärtsrichtung (4) weist,
o einen Boden (40),
o einen Fluideinlassanschluss (51) aufweisend eine Fluideinlasswand (41), wobei die Fluideinlasswand (41) ein Einlassdurchgangsloch (414) im Boden (40) umgibt und sich vom Boden (40) in die Vorwärtsrichtung (3) erstreckt,
o einen Fluidauslassanschluss (52) aufweisend eine Fluidauslasswand (42), wobei die Fluidauslasswand (42) ein Auslassdurchgangsloch (424) im Boden (40) umgibt und sich vom Boden (40) in die Vorwärtsrichtung (3) erstreckt;
o eine Mantelwand (60), welche am Boden (40) befestigt ist,
o eine erste in die Vorwärtsrichtung weisende Gleitlagerfläche, wobei die Gleitlagerfläche konfiguriert ist, um eine axiale Bewegung der Filterkartusche (1) in die Vorwärtsrichtung (3) zu begrenzen,
wobei
die erste Gleitlagerfläche durch einen Satz von ersten nach vorne gerichteten Seiten (413, 423, 433) von Wänden (41, 42, 43) oder Abschnitten davon bereitgestellt ist, wobei die Wände (41, 42, 43) sich vom Boden (40) in die Vorwärtsrichtung (3) erstrecken,
**dadurch gekennzeichnet, dass**
ein Punkt *P*₁ existiert, welcher dieselbe Distanz d_{|*R̅P̅*|}, zu allen Punkten der ersten Gleitlagerfläche hat.

2. Die Filterkartusche (1) nach Anspruch 1, **dadurch gekennzeichnet, dass** die Kontur einer ersten Projektion der nach vorne gerichteten Seiten (413, 423) der Fluideinlasswand (41) und der Fluidauslasswand (42) auf eine sich orthogonal zur Längsachse (2) erstreckende Referenzebene nicht punktsymmetrisch in Bezug auf die Längsachse (2) ist und dass die Kontur des ersten Vorsprungs nicht rotationsinvariant bezüglich einer Rotation um die Längsachse (2) ist.

3. Die Filterkartusche (1) nach Anspruch 1 oder 2, **dadurch gekennzeichnet, dass**
eine Drehung der Gleitlagerfläche um 2*π* = 360° um die Längsachse (2) mindestens eine Ringfläche *S*₁ erzeugt, welche einen Satz von Punkten *R*(*r, ϕ*) ist, und dass jeder Punkt *R*(*r, ϕ*) eine Distanz *d*_{|*R̅S̅*|}(*R*(*r*,*φ*)) = *d(r, <p)* zu einer Ebene *A* hat, wobei die Ebene *A* sich durch den Boden (40) erstreckt und orthogonal zur Längsachse (2) ist, und dass die Distanz *d(r, <p)* monoton mit zunehmendem Radius r zunimmt oder abnimmt, während sie bei jedem gegebenen Radius r für alle Azimuthwinkel *ϕ* konstant bleibt.

4. Die Filterkartusche (1) nach einem der vorhergehenden Ansprüche,
**dadurch gekennzeichnet, dass** der Punkt *P*₁ auf der Längsachse (2) ist.

5. Die Filterkartusche (1) nach einem der vorhergehenden Ansprüche, **dadurch gekennzeichnet, dass**
- die Filterkartusche (1) mindestens einen ersten Vorsprung (48) hat, welcher in radialer Richtung durch einen bezüglich der Längsachse (2) inneren Radius *r*_{48ᵢ} und durch einen bezüglich der Längsachse (2) äußeren Radius *r*_{48ₒ} begrenzt ist,
- der erste Vorsprung (48) sich in die Vorwärtsrichtung (3) über jedes Element des Verbinders (50) innerhalb eines ersten Rings erstreckt, welcher durch den inneren Radius *r*_{48ᵢ} und den äußeren Radius *r*_{48ₒ} des ersten Vorsprungs (48) begrenzt ist.

6. Die Filterkartusche (1) nach Anspruch 5, **dadurch gekennzeichnet, dass**
- die Filterkartusche (1) mindestens einen zweiten Vorsprung (49) hat, welcher in radialer Richtung durch einen bezüglich der Längsachse (2) inneren Radius *r*_{49ᵢ} und durch einen bezüglich der Längsachse (2) äußeren Radius *r*_{49ₒ} begrenzt ist und dass
- der zweite Vorsprung (49) sich in Vorwärtsrichtung (3) über jedes weitere Element des Verbinders (50) innerhalb eines zweiten Rings erstreckt, welcher durch den inneren Radius *r*_{49ᵢ} und den äußeren Radius *r*_{49ₒ} des zweiten Rings (49) begrenzt ist, und dass
- der erste Ring und der zweite Ring nicht überlappen, d. h. *r*_{48ᵢ} ≥ *r*_{49ₒ} oder *r*_{48ₒ} ≤ *r*_{49ᵢ}.

7. Die Filterkartusche (1) nach Anspruch 4 oder Anspruch 5, **dadurch gekennzeichnet, dass** die Ringfläche *S*₁ nach Anspruch 3 mindestens zwei konzentrische Ringflächenabschnitte mit einem dazwischenliegenden Spalt hat, und dass der erste Vorsprung (48) und/oder der zweite Vorsprung (49) sich durch den Spalt erstrecken.

8. Ein Filtergehäuse zum Unterbringen einer Filterkartusche (1) nach einem der vorhergehenden Ansprüche, wobei das Filtergehäuse ein Filtergehäusevolumen aufweist, welches von einem Gehäusesockel (10) und einer Gehäuseabdeckung (20) umschlossen ist, wobei
- die Gehäuseabdeckung (20) entfernbar an dem Gehäusesockel (10) befestigt ist,
- das Filtergehäuse eine Gehäuseachse (102) hat,
- der Sockel (10) einen ersten Fluidanschluss (151) hat, welcher konfiguriert ist, um mit dem Fluideinlassanschluss (51) verbunden zu werden, und einen zweiten Fluidanschluss (152), welcher konfiguriert ist, um mit dem Fluidauslassanschluss (52) verbunden zu werden;
- der Sockel (10) eine zweite Gleitlagerfläche (146) aufweist, welche in die Rückwärtsrichtung (4) weist, wobei die zweite Gleitlagerfläche (146) konfiguriert ist, um eine axiale Bewegung der Filterkartusche (1) in die Vorwärtsrichtung (3) zu begrenzen,
**dadurch gekennzeichnet, dass** es einen Punkt *P*₂ gibt, welcher dieselbe Distanz *d*_{|*R̅*₂*P̅*₂|} zu allen Punkten *R*₂ auf der zweiten Gleitlagerfläche hat.

9. Das Filtergehäuse nach Anspruch 8, **dadurch gekennzeichnet, dass** der erste Fluidanschluss (151) durch ein erstes offenes Ende einer ersten Leitung in der zweiten Gleitlagerfläche (146) definiert ist und/oder dass der zweite Fluidanschluss (152) durch ein zweites offenes Ende einer zweiten Leitung in der zweiten Gleitlagerfläche (146) definiert ist.

10. Das Filtergehäuse nach Anspruch 8 oder 9, **dadurch gekennzeichnet, dass** die Kontur der zweiten Erhebung nicht rotationsinvariant bezüglich einer Rotation um die Gehäuseachse (102) ist.

11. Das Filtergehäuse nach einem der Ansprüche 8 oder 10, **dadurch gekennzeichnet, dass**
eine Rotation der zweiten Gleitlagerfläche um 2*π* um die Gehäuseachse (102) mindestens eine Ringfläche *S*₂ erzeugt, welche ein Satz von Punkten *R*₂(*r*,*ϕ*) ist, und dass jeder Punkt *R*₂(*r*,*ϕ*) eine Distanz *d*_{|*R̅*₂*S̅*₂|}(*R*₂(*r*,*φ*)) = *d*₂(*r*,*ϕ*) zu einer Ebene *A*₂ hat, wobei die Ebene *A*₂ sich durch das Gehäuse erstreckt und orthogonal zur Gehäuseachse (102) ist, und dass die Distanz *d*₂(*r, ϕ*) mit zunehmendem Radius r monoton zunimmt oder abnimmt, während sie bei jedem gegebenen Radius r für alle Azimuthwinkel *ϕ* konstant bleibt.

12. Das Filtergehäuse nach einem der Ansprüche 8 bis 11, **dadurch gekennzeichnet, dass** der Gehäusesockel (10) weiterhin aufweist:
- eine erste Ausbuchtung (148), welche in radialer Richtung durch einen inneren Radius *r*_{148ᵢ} und durch einen äußeren Radius *r*_{148ₒ} bezüglich der Gehäuseachse (102) begrenzt ist, wobei die erste Ausbuchtung (148) sich in eine Rückwärtsrichtung (4) über die zweite Gleitlagerfläche erstreckt, und/oder
- eine zweite Ausbuchtung (149), welche in radialer Richtung durch einen inneren Radius *r*_{149ᵢ} und durch einen äußeren Radius *r*_{149ₒ} bezüglich der Gehäuseachse (102) begrenzt ist, wobei die zweite Ausbuchtung (149) sich in eine Rückwärtsrichtung (4) über die zweite Gleitlagerfläche erstreckt.

13. Das Filtergehäuse nach einem der Ansprüche 8 bis 12, **dadurch gekennzeichnet, dass** der Gehäusesockel (10) ein erstes Schraubengewinde hat und dass die Gehäuseabdeckung (20) ein zweites Schraubengewinde hat, welches komplementär zum ersten Schraubengewinde ist, und dass die Gewindeachse die Gehäuseachse (102) ist.

14. Das Filtergehäuse nach einem der Ansprüche 8 bis 13, **dadurch gekennzeichnet, dass** die Kontur einer zweiten Erhebung der rückwärts gerichteten Seiten (146) des ersten Fluidanschlusses (151) und des zweiten Fluidanschlusses (152) auf einer orthogonal zur Gehäuseachse (2) liegenden Referenzebene nicht punktsymmetrisch bezüglich der Gehäuseachse (2) ist.

15. Ein Filtersystem, **dadurch gekennzeichnet, dass** es mindestens eines von dem Filtergehäuse nach einem der Ansprüche 8 bis 14 und/oder eine Filterkartusche (1) nach einem der Ansprüche 1 bis 7 aufweist.

## Revendications

1. Cartouche filtrante (1) comprenant au moins :
- un élément filtrant (30) avec une extrémité avant, une extrémité arrière et un canal de fluide (37) ;
- un axe longitudinal (2) s'étendant à travers l'extrémité avant de l'élément filtrant (30) et à travers l'extrémité arrière de l'élément filtrant (30),
- un élément de raccord (50) qui est fixé à l'extrémité avant de l'élément filtrant (30), dans laquelle l'élément de raccord (50) présente au moins
o un côté tourné vers l'avant (53) tourné à l'opposé de l'extrémité avant de l'élément filtrant (30) dans une direction vers l'avant (3) et un côté tourné vers l'arrière (54) tourné vers l'extrémité avant de l'élément filtrant (30) dans une direction vers l'arrière (4),
o un fond (40),
o un orifice d'entrée de fluide (51) comprenant une paroi d'entrée de fluide (41), laquelle paroi d'entrée de fluide (41) entoure un trou traversant d'entrée (414) dans le fond (40) et s'étend à partir du fond (40) dans la direction vers l'avant (3),
o un orifice de sortie de fluide (52) comprenant une paroi de sortie de fluide (42), laquelle paroi de sortie de fluide (42) entoure un trou traversant de sortie (424) dans le fond (40) et s'étend à partir du fond (40) dans la direction vers l'avant (3) ;
o une paroi périphérique (60) qui est fixée au fond (40),
o une première surface de palier lisse tournée dans la direction vers l'avant, dans laquelle la surface de palier lisse est configurée pour limiter un mouvement axial de la cartouche filtrante (1) dans la direction vers l'avant (3),
dans laquelle
la première surface de palier lisse est fournie par un ensemble de premiers côtés tournés vers l'avant (413, 423, 433) de parois (41, 42, 43) ou de sections de celles-ci, dans laquelle les parois (41, 42, 43) s'étendent à partir du fond (40) dans la direction vers l'avant (3),
**caractérisé en ce que**
il existe un point *P*₁ qui présente la même distance *d*_{|*R̅P̅*|} par rapport à tous les points sur la première surface de palier lisse.

2. Cartouche filtrante (1) selon la revendication 1, **caractérisée en ce que** le contour d'une première projection des côtés tournés vers l'avant (413, 423) de la paroi d'entrée de fluide (41) et de la paroi de sortie de fluide (42) sur un plan de référence qui est orthogonal à l'axe longitudinal (2) n'est pas symétrique par symétrie centrale par rapport à l'axe longitudinal (2) et **en ce que** le contour de la première projection n'est pas rotationnellement invariant vis-à-vis d'une rotation autour de l'axe longitudinal (2).

3. Cartouche filtrante (1) selon la revendication 1 ou 2, **caractérisée en ce qu'**une rotation de la surface de palier lisse de 2*π* = 360° autour de l'axe longitudinal (2) génère au moins une surface de bague *S₁*, qui est un ensemble de points *R*(*r,ϕ*), et **en ce que** chaque point *R*(*r, ϕ*) présente une distance *d*_{|*R̅S̅*|} (*R*(*r,* Ø)) = *d*(*r,ϕ*) à un plan A, dans laquelle le plan A s'étend à travers le fond (40) et est orthogonal à l'axe longitudinal (2), et **en ce que** la distance *d(r, <p)* croît ou décroît de façon monotone avec un rayon r croissant, tout en étant constante à tout rayon r donné pour tous les angles d'azimut *ϕ*.

4. Cartouche filtrante (1) selon l'une des revendications précédentes, **caractérisée en ce que** le point *P₁* est sur l'axe longitudinal (2).

5. Cartouche filtrante (1) selon l'une des revendications précédentes, **caractérisée en ce que**
- la cartouche filtrante (1) comporte au moins une première protubérance (48) qui est délimitée dans une direction radiale par un rayon interne *r*_{48*i*} et par un radius externe r*r*_{48ₒ} par rapport à l'axe longitudinal (2),
- la première protubérance 48 s'étend dans la direction vers l'avant (3) sur toute particularité du raccord (50) au sein d'une première bague délimitée par le rayon interne *r*_{48*i*} et le rayon externe *r*_{48*o*} de ladite première protubérance (48).

6. Cartouche filtrante (1) selon la revendication 5, **caractérisée en ce que**
- la cartouche filtrante (1) comporte au moins une deuxième protubérance (49) qui est délimitée dans la direction radiale par un rayon interne *r*_{49ᵢ} et par un rayon externe ni *r*_{49ₒ} par rapport à l'axe longitudinal (2) et **en ce que**
- la deuxième protubérance (49) s'étend dans la direction vers l'avant (3) sur la toute autre particularité du raccord (50) au sein d'une deuxième bague qui est délimitée par le rayon interne *r*_{49ᵢ} et le rayon externe de la deuxième protubérance (49), et **en ce que**
- la première bague et la deuxième bague ne se chevauchent pas, soit *r*_{48ᵢ} ≥*r*_{49ₒ} ou *r*_{48ₒ} ≤ *r*_{49ᵢ}.

7. Cartouche filtrante (1) selon la revendication 4 ou la revendication 5, **caractérisée en ce que** la surface de bague S₁ de la revendication 3 comporte au moins deux sections de surface de bague concentriques avec un écartement entre elles, et **en ce que** la première protubérance (48) et/ou la deuxième protubérance (49) s'étendent à travers l'écartement.

8. Logement de filtre destiné à accueillir une cartouche filtrante (1) de l'une des revendications précédentes, dans lequel le logement de filtre comprend un volume de logement de filtre, qui est enserré par une douille de logement (10) et un couvercle de logement (20), dans lequel
- le couvercle de logement (20) est fixé de manière libérable à la douille de logement (10),
- le logement de filtre comporte un axe de logement (102),
- la douille (10) comporte un premier orifice de fluide (151) configuré pour être raccordé à l'orifice d'entrée de fluide (51) et un second orifice de fluide (152) configuré pour être raccordé à l'orifice de sortie de fluide (52) ;
- la douille (10) comprend une deuxième surface de palier lisse (146) tournée dans la direction vers l'arrière (4), dans lequel la deuxième surface de palier lisse (146) est configurée pour limiter un mouvement axial de la cartouche filtrante (1) dans la direction vers l'avant (3),
**caractérisé en ce qu'**il existe un point *P*₂ qui présente la même distance *d*_{|*R̅*₂*P̅*₂|} à tous les points *R₂* sur la deuxième surface de palier lisse.

9. Logement de filtre selon la revendication 8, **caractérisé en ce que** le premier orifice de fluide (151) est défini par une première extrémité ouverte d'un premier conduit dans la deuxième surface de palier lisse (146) et/ou **en ce que** le deuxième orifice de fluide (152) est défini par une deuxième extrémité ouverte d'un deuxième conduit dans la deuxième surface de palier lisse (146).

10. Logement de filtre selon la revendication 8 ou 9, **caractérisé en ce que**
le contour de la deuxième projection n'est pas rotationnellement invariant vis-à-vis d'une rotation autour de l'axe de logement (102).

11. Logement de filtre selon l'une des revendications 8 ou 10, **caractérisé en ce que**
une rotation de la deuxième surface de palier lisse de 2*π* autour de l'axe de logement (102) génère au moins une surface de bague *S*₂, qui est un ensemble de points *R*₂(*r*,*ϕ*), et **en ce que** chaque point *R*₂(*r*,*ϕ*) présente une distance *d*_{|*R̅*₂*s̅*₂|}(*R*(*r*, Ø)) = *d₂*(*r,ϕ*) à un plan *A*₂, dans lequel le plan A₂ s'étend à travers le logement et est orthogonal à l'axe de logement (102), et **en ce que** la distance *d*₂(*r,ϕ*) croît ou décroît de façon monotone avec un rayon r croissant, tout en étant constante à tout rayon r donné pour tous les angles d'azimut *ϕ*.

12. Logement de filtre selon l'une des revendications 8 à 11, **caractérisé en ce que** la douille du logement (10) comprend en outre :
- une première protubérance (148) qui est délimitée dans une direction radiale par un rayon interne *r*_{148ᵢ} et par un rayon externe *r*_{148*o*} par rapport à l'axe de logement (102), dans lequel la première protubérance (148) s'étend dans une direction vers l'arrière (4) sur la deuxième surface de palier lisse, et/ou
- une deuxième protubérance (149) qui est délimitée dans une direction radiale par un rayon interne *r*_{149ᵢ} et par un rayon externe *r*_{149ₒ} par rapport à l'axe de logement (102), dans laquelle la deuxième protubérance (149) s'étend dans une direction vers l'arrière (4) sur la deuxième surface de palier lisse.

13. Logement de filtre selon l'une des revendications 8 à 12, **caractérisé en ce que** la douille du logement (10) présente un premier filetage et **en ce que** le couvercle de logement (20) présente un second filetage complémentaire du premier filetage, et **en ce que** l'axe de filetage est l'axe de logement (102).

14. Logement de filtre selon l'une des revendications 8 à 13, **caractérisé en ce que** le contour d'une seconde projection des faces tournées vers l'arrière (146) du premier orifice de fluide (151) et du second orifice de fluide (152) sur un plan de référence qui est orthogonal à l'axe de logement (2) n'est pas symétrique par symétrie centrale par rapport à l'axe de logement (2).

15. Système de filtre **caractérisé en ce qu'**il comprend au moins l'un parmi le logement de filtre de l'une des revendications 8 à 14 et/ou une cartouche filtrante (1) de l'une des revendications 1 à 7.
